# EUROPEAN PATENT APPLICATION

(11) **EP 3 467 397 A1**
(43) Date of publication of application: **10.04.2019**
(21) Application number: 16903230.7
(22) Date of filing: 26.05.2016
(51) Int. Cl.: F24J 2/05, F24J 2/46, F24J 2/50

(54) **SOLAR EVACUATED HEAT COLLECTING PANEL**

(71) Applicant: XL Co., Ltd, Wonju-si, Gangwon-do 26311 (KR)
(72) Inventor: PARK, Rae Jun, Wonju-si, Gangwon-do 26312 (KR)
(74) Representative: Habermann, Hruschka & Schnabel
(86) International application number: PCT/KR2016/005560
(87) International publication number: WO 2017/204382

(57) **Abstract**

The present invention relates to a solar evacuated heat collecting panel for collecting solar energy and more particularly, to a solar evacuated heat collecting panel having a heat absorbing plate and a heat medium circulating tube mounted therein so as to withstand external stress by means of a glass window structure and to minimize loss of solar energy collected therein. The present invention provides a solar evacuated heat collecting panel for collecting solar heat to obtain energy, the solar evacuated heat collecting panel comprising: a case made of glass or a metallic material; a glass window mounted on the upper portion of the case so as to form a space together with the case; a heat collecting portion comprising a heat collecting plate seated inside the case and the glass window and at least one heat medium circulating tube attached to the lower portion of the heat collecting plate by brazing welding and mounted so as to penetrate one side of the case; a side spacer made of a metallic material so as to connect a edge of the glass window and a edge of the case to each other; an inner spacer that penetrates the heat absorbing plate so as to support the case and the glass window at a predetermined interval; and an evacuating tube mounted on one side of the case so as to evacuate the interior of the panel.

## Description

### Technical Field

The present invention relates to a solar evacuated heat collecting panel for collecting solar energy and more particularly, to a solar evacuated heat collecting panel which has a heat absorbing plate and a heat medium circulating tube mounted therein to withstand external stress by means of a glass window structure and to minimize loss of solar energy collected therein.

### Background Art

Generally, as a method for using solar heat as an energy source, a method of using a solar cell that generates electric energy by collecting solar heat is widely known. As a method of using solar heat in addition to a method of converting solar heat into electric energy, there are various types of heat collecting apparatuses that can efficiently collect solar radiation heat and use the collected solar radiation heat as an indirect or direct heating source.

That is, by a method of absorbing the radiation ray from the sun in a heat collecting plate, absorbing the heat energy in a heat medium through the heat transfer, and flowing the hot heat medium, hot water is produced to be used for the heating and cooling of buildings and hot water heating or used for industrial process heat, heat generation, or the like. A core of a solar heat utilization technology is solar heat collection, heat storage, system control, or the like. Solar energy is energy with low energy density and seasonally and hourly severe changes, and heat collection and heat storage are the most fundamental technology, and there are various attempts for heat collection and heat storage.

In the related art, Korean Utility Model Registration No. 20-1982-0000933 relates to a solar evacuated flat plate type heat collector. There is disclosed a technology relating to a solar evacuated flat plate type heat collector, in which a sieve is tooled or weld-canned with a single piece of steel plate to reinforce safety so as to prevent air from being infiltrated at vacuum high pressure, the heat collector is formed with the single piece of steel plate to withstand high pressure by a single body from an upper glass insertion jaw by four sides at the lower surface of the heat collector to a bent side at the four surfaces, an outer surface is coated with FRP and a synthetic resin material to prevent the abrasion of the steel plate or the entire sieve is formed with FRP and a synthetic resin, a plurality of high-pressure protective bolts is attached to a separation space from the internal lower surface of the glass surface of the heat collector having a synthetic resin plate and a metallic thin plate formed on five inner surfaces to protect an insulating material against high pressure, a rubber barking is attached to the glass insertion jaw, the glass is inserted into the upper portion thereof and then the rubber barking is sealed with a silicon adhesive, air is withdrawn to the inner space of the heat collector with an exhaust coke to be vacuumed, and a high-pressure protective bolt is supported between the glass surface and the space of the lower surface plate to prevent the space in the heat collector from being broken by high pressure, thereby withstanding high pressure.

Japanese Unexamined Patent Application Publication No. 2007-178056 relates to an evacuated solar heat collecting device, and there is disclosed a technology for an evacuated solar heat collecting device, in which since a window glass needs to be supported by a support shaft to prevent the window glass from being broken due to atmospheric pressure applied to the window glass, and a hole needs to be formed on the heat collecting plate to insert the support shaft, in order to solve the problems, the evacuated solar heat collecting device include a dome-shaped window glass which is transmitted with solar light and has a central portion swelled above the periphery, a metallic edge covering the window glass, a metal gasket inserted between an outer peripheral surface of the window glass and the metallic edge, a case on a container in which a side wall is formed to surround the outer periphery of the edge and a lower plate is convexly formed inward, and a heat collecting plate which is accommodated in the case to receive heat of the solar light, thereby simplifying the structure without a plurality of support shafts and support shaft holes.

US Patent Registration No. 06119683 relates to a solar heat collecting device, and there is disclosed a solar hat collecting device in which a heat absorbing plate for absorbing solar radiation is mounted on a vacuum container, the solar heat accumulated in the heat absorbing plate is transmitted to an operational medium in a pipe connected to the heat absorbing plate, an upper surface layer is formed on the upper portion of the heat absorbing plate to transmit the solar radiation irradiated to the heat absorbing plate and reflect infrared radiation from the heat absorbing plate, a lower surface layer is formed on a lower surface of the heat absorbing plate to reflect the infrared radiation from the heat absorbing plate, an insulating film is formed between the lower surface of the heat absorbing plate and a bottom surface of the vacuum container, a reflective layer is formed on the bottom surface of the vacuum container, a film for transmitting the solar radiation and reflecting the infrared radiation is provided between the upper surface of the heat absorbing plate and the upper wall of the vacuum container, and the upper wall of the vacuum container is formed to have a plurality of transparent curved surfaces.

Korean Patent Registration No. 10-0340625 relates to an integrated plate type heat collecting plate of a flat plate type solar heat collection device, and there are disclosed a technology relating to a manufacturing method of automatic welding and a heat collecting plate manufactured by the manufactured method, in which in order to improve thermal performance unlike a shape of a heat collecting plate, a welding method and limitation of the number of branch pipes in the related art, two pairs of upper heat absorbing plates and lower heat absorbing plates are fabricated by pressing various types of molds in which a heat absorbing plate, a riser tube, and a header are integrally symmetrical to each other to face each other, the outer side is core-welded for leakage prevention and the inner side is spot-welded to secure a riser tube circuit and prevent expansion by pressure.

However, in the conventional heat collecting panel, there is a problem that the solar heat energy is not efficiently transmitted to the heat medium but lost.

In addition, since the heat collecting panel does not effectively respond to the stress due to the structure, in many cases, breakage of glass occurs.

### Disclosure

### Technical Problem

An object of the present invention is to provide a solar evacuated heat collecting panel capable of minimizing energy loss and conduction loss due to air layer convection generated in an existing atmospheric pressure flat plate heat collector as a solar evacuated heat collecting panel.

To this end, another object of the present invention is to provide a solar evacuated heat collecting panel having a large area by providing an evacuated heat collecting panel in which a large-sized heat absorbing plate and a heat medium circulation tube are mounted therein and an upper transmission window is divided into a plurality of transmission windows to be integrally formed.

Further, yet another object of the present invention is to provide a shape and a structure of an evacuated heat collecting panel in which an upper transmission window used as a member in the solar evacuated heat collecting panel has a strength enough to withstand an atmospheric pressure load against an inner vacuum and the inner vacuum is maintained at 10-3 torr.

### Technical Solution

In order to achieve the objects, the present invention provides a solar evacuated heat collecting panel by collecting solar heat to obtain energy, the evacuated heat collecting panel including: a case made of glass or a metallic material; a glass window mounted on the upper portion of the case so as to form a space together with the case; a heat collecting portion including a glass window mounted on the upper portion of the case so as to form a space together with the case and one or more heat medium circulation tubes attached to the lower portion of the heat absorbing plate by brazing welding and mounted by penetrating one side of the case; a side space made of a metallic material to connect an edge of the glass window and an edge of the case to each other; an inner spacer that penetrates the heat absorbing plate to support the case and the glass window at a predetermined interval; and an evacuating tube mounted on one side of the case to evacuate the interior of the panel.

The case may include a bottom surface portion, a side surface portion formed integrally with the bottom surface portion, and a connection portion formed integrally with the upper end of the side surface portion, a plurality of horizontal embossing grooves and vertical embossing grooves may be formed alternately to each other on the bottom surface portion, a plurality of vertical embossing grooves may be formed on the side surface portion, and the connection portion may be formed in a planar shape and the side spacer is bonded to the connection portion.

The side spacer may be formed of a ' 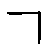 ' or ' 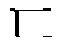 '-shaped angle.

The glass window may include horizontal grooves formed at predetermined intervals, vertical grooves formed at predetermined intervals while crossing the horizontal grooves, a plurality of dome-shaped transmission windows formed between the horizontal grooves and the vertical grooves, an outer groove formed when an outmost horizontal groove and an outmost vertical groove meet each other, and an edge connection portion formed around the outer groove, and the side spacer may be bonded to the edge connection portion directly or through fritz bonding.

The inner spacer may include a plurality of cylindrical or spherical spacers which are mounted on the lower surface of the vertical groove formed at the center of the glass window along the vertical groove to support the glass window and a pair of angle-shaped spacers which support the lower portion of the plurality of cylindrical or spherical spacers and facing each other to be elongated in a longitudinal direction.

A getter may be applied on the front surface of the case, the inner surface of the side spacer, one side or both sides of the heat absorbing plate, or a partial surface of the heat absorbing plate to absorb gas in the evacuated heat collecting panel.

The inner spacer may be made of metal, ceramic, glass or an inorganic material.

The inner surface or the outer surface of the glass window may be coated with an organic or inorganic material for increasing light transmittance and decreasing reflectance.

### Advantageous Effects

According to the present invention, in the solar evacuated heat collecting panel, the upper transmission window is divided into the plurality of transmission window to be integrally formed and the heat absorbing plate and the heat medium circulation tube are mounted therein, and as a result, a large size is enabled, maintenance is easy, and cost is low.

The glass plate is formed of a plurality of round types and bent at each section, and while the glass plate is exposed to an external environment, stresses causing breakage of a front glass window due to a weather change are offset in each zone to reduce significantly a possibility of the breakage.

In addition, since the spacer is appropriately mounted therein, it is possible to sufficiently withstand the atmospheric pressure load against the internal vacuum pressure.

Further, it is possible to continuously maintain a vacuum pressure of 10-3 torr or less after performing vacuum sealing by a getter coated inside the evacuated heat collecting flat plate according to the configuration of the present invention.

### Description of Drawings

FIG. 1 is a perspective view of a solar evacuated heat collecting panel according to the present invention.
FIG. 2 is a partially cutout perspective view of the solar evacuated heat collecting panel according to the present invention.
FIG. 3 is a partially sectional perspective view of the solar evacuated heat collecting panel according to the present invention.
FIG. 4 is a partially enlarged view of an edge portion of the solar evacuated heat collecting panel according to the present invention.
FIG. 5 is a partially enlarged view of an inner spacer portion of the solar evacuated heat collecting panel according to the present invention.
FIG. 6 is a perspective view viewed from a lower portion of the solar evacuated heat collecting panel according to the present invention.
FIG. 7A is a plan view of the solar evacuated heat collecting panel according to the present invention, FIG. 7B is a cross-sectional view taken along line G-G, and FIG. 7C is a cross-sectional view taken along line J-J.
FIG. 8A is a cross-sectional view taken along line L-L and FIG. 8B is a cross-sectional view taken along line M-M in FIG. 7.
FIG. 9 is a partially enlarged view of a side spacer portion.

### Best Mode of the Invention

A best aspect of the present invention provided a solar evacuated heat collecting panel by collecting solar heat to obtain energy, in which the evacuated heat collecting panel includes: a case made of glass or a metallic material; a glass window mounted on the upper portion of the case so as to form a space together with the case; a heat collecting portion including a glass window mounted on the upper portion of the case so as to form a space together with the case and one or more heat medium circulation tubes attached to the lower portion of the heat absorbing plate by brazing welding and mounted by penetrating one side of the case; a side space made of a metallic material to connect a edge of the glass window and a edge of the case to each other; an inner spacer that penetrates the heat absorbing plate to support the case and the glass window at a predetermined interval; and an evacuating tube mounted on one side of the case to evacuate the interior of the panel.

### Modes of the Invention

Hereinafter, exemplary embodiments of the present invention in which the above objects can be specifically realized will be described in detail with reference to the accompanying drawings. In describing the exemplary embodiment, the same name and the same reference numeral are used with respect to the same component and the resulting additional description will be omitted.

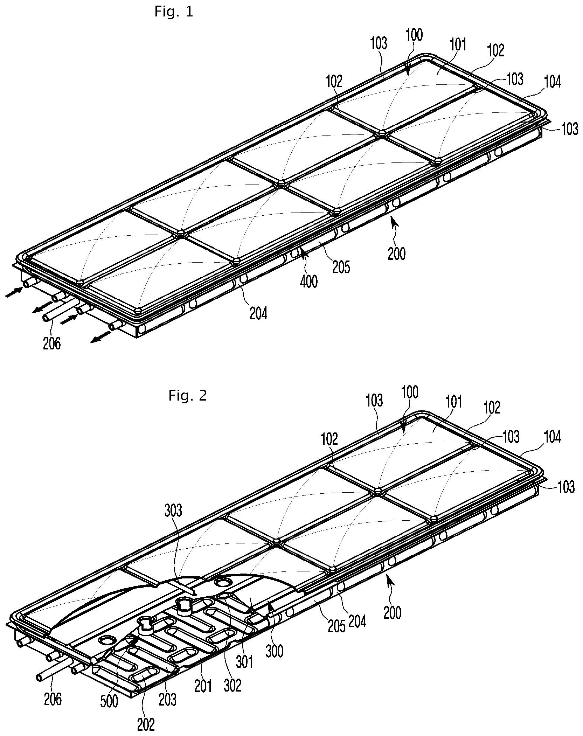

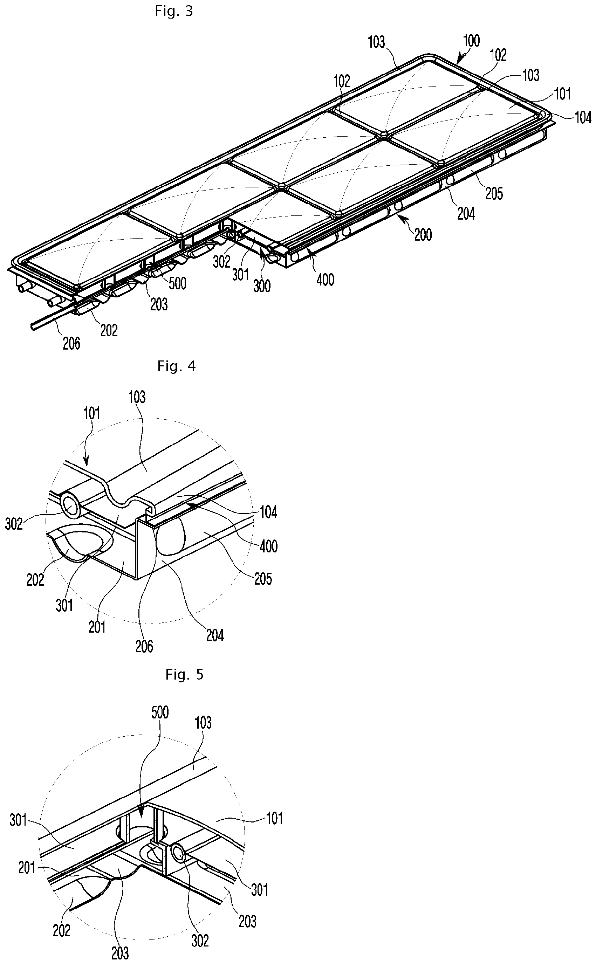

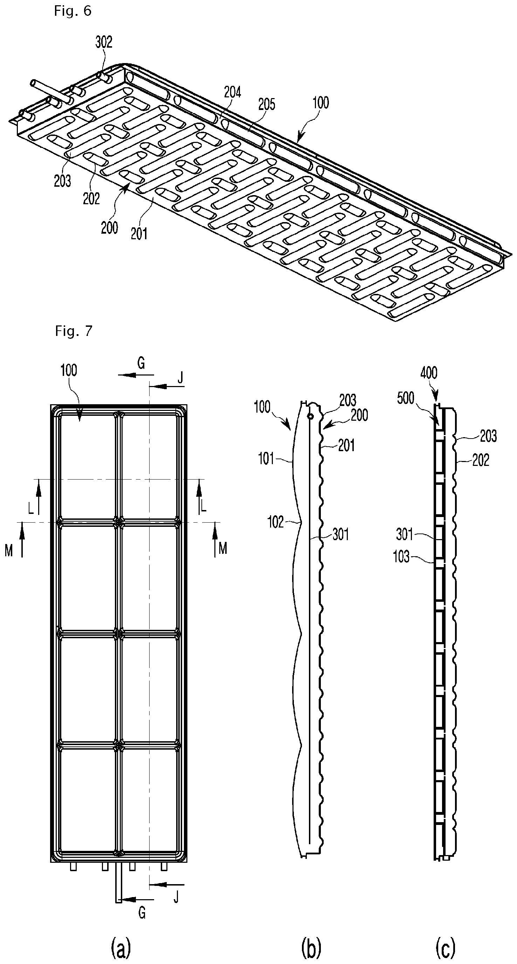

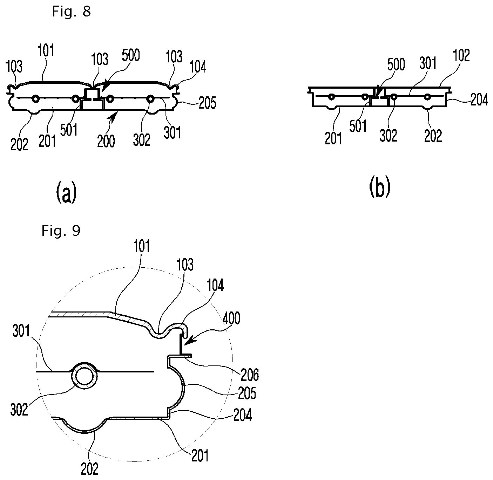

FIG. 1 is a perspective view of a solar evacuated heat collecting panel according to the present invention, FIG. 2 is a partially cutout perspective view of the solar evacuated heat collecting panel according to the present invention, FIG. 3 is a partially sectional perspective view of the solar evacuated heat collecting panel according to the present invention, FIG. 4 is a partially enlarged view of an edge portion of the solar evacuated heat collecting panel according to the present invention, FIG. 5 is a partially enlarged view of an inner spacer portion of the solar evacuated heat collecting panel according to the present invention, FIG. 6 is a perspective view viewed from a lower portion of the solar evacuated heat collecting panel according to the present invention, FIG. 7A is a plan view of the solar evacuated heat collecting panel according to the present invention, FIG. 7B is a cross-sectional view taken along line G-G, and FIG. 7C is a cross-sectional view taken along line J-J, FIG. 8A is a cross-sectional view taken along line L-L and FIG. 8B is a cross-sectional view taken along line M-M in FIG. 7, and FIG. 9 is a partially enlarged view of a side spacer portion.

FIG. 1 illustrates an outer side surface as an overall perspective view of a solar evacuated heat collecting panel according to the present invention. As illustrated in FIG. 1, the outer side surface of the solar evacuated heat collecting panel according to the present invention is formed by a case 200, a glass window 100 mounted at the upper portion of the case 200, and a side spacer 400 connecting the edge of the case 200 and the edge of the glass window 100 to each other.

FIG. 2 is a partially cut perspective view of the glass window 100 of the solar evacuated heat collecting panel according to the present invention. As illustrated in FIG. 2, the glass window 100 is elongated in a longitudinal direction and configured by a vertical groove 103 and a horizontal groove 102, a dome-shaped transmission window 101 formed between the vertical groove 103 and the horizontal groove 102, and an edge connection portion 104 formed at the edge. External stress may be offset to a certain extent by self structures of the dome-shaped transmission window 101 formed to protrude forward in a rounded arc shape and the grooves 102 and 103 between the transmission windows 101. That is, even if the dome-shaped transmission window 101 is stretched by heat, the grooves 102 and 103 may act as a buffer to offset the stress due to the external action. In addition, the material of the glass window 100 preferably glass having a thermal expansion coefficient that can directly bonded with a metal as boric acid glass having a high solar transmittance, and the inner side surface and the outer side surface of the glass window 100 may be coated with an inorganic or organic material for increasing light transmittance and decreasing reflectance. The heat collecting portion 300 is mounted on the lower portion of the glass window 100. The heat collecting portion 300 is configured by a heat absorbing plate 301, a heat medium circulation tube 302 welded on the lower portion of the heat absorbing plate 301 by brazing, and a support angle 303 for supporting the heat absorbing plate 301. The support angle 303 fixes the heat absorbing plate 301 to the upper portion of the heat absorbing plate 301. The upper surface of the heat absorbing plate 301 may be subjected to surface treatment or coating with a metal or an inorganic material for increasing the surface water absorption rate and lowering the reflectance. The case 200 includes a bottom surface portion 201, a side surface portion 204 formed integrally with the bottom surface portion 201 so as to form a side surface, and a connection portion 206 where the side spacer 400 is bonded to the upper end of the side surface portion 204. The connection portion 206 is preferably formed in a planar shape so that the side spacer 400 may be easily bonded. Further, an evacuated tube 207 and the heat medium circulation tube 302 are through-mounted on the side surface portion 204, and accordingly, the side surface portion 204 may serve as a support of the heat medium circulation tube 302. A horizontal embossing 203 and a vertical embossing 202 are formed on the bottom surface portion 201 to absorb a change in stress caused by an external environment due to a large mass moment of inertia. In addition, a lateral embossing 205 is formed even on the side surface portion 204 to absorb a change in stress acting to the side surface. Further, the embossings 202, 203, and 205 increase the surface area to increase an area capable of coating the getter, thereby enhancing absorption performance of gas generated in a vacuum state and constantly maintaining the degree of vacuum to 10⁻³ torr.

Further, as illustrated in FIG. 3, an inner spacer 500 is mounted on a lower surface of the vertical groove 103 formed at a center of the glass window 100, and the glass window 100 and the case 200 are maintained at a predetermined interval by the inner spacer 500 and withstand an atmospheric pressure by the inner spacer 500. The inner spacer 500 may be formed in a cylindrical or spherical shape. A separate angle type spacer 501 may be mounted on the lower portion of the inner spacer 500. The angle type spacer 501 is elongated in a longitudinal direction to withstand the pressure acting by the atmospheric pressure. The inner spacer 500 is mounted by penetrating the heat absorbing plate 301. The evacuated tube 207 is sealed after the evacuation to maintain a constant pressure.

FIG. 4 illustrates that the connection portion 206 of the side surface portion 204 is connected with the side spacer 400. The connection portion 206 is connected with the side spacer 400 through welding or directly bonding. The side spacer 400 may be formed as an 'L' or a 'C'-shaped angle so as to provide a buffering action by external stress. In addition, the side spacer 400 is bonded to an edge connection portion 104 of the glass window 100. The glass window 100 and the side spacer 400 may be bonded to each other directly or through fritz bonding at a low melting point. The fritz bonding means a method of directly applying and bonding a ceramic-based specific liquid onto glass. Thus, the glass window 100 and the side spacer 400 made of the metal material may be directly bonded to each other.

FIG. 5 illustrates a relationship between the inner spacer 500 and the heat absorbing plate 301, and that the between the inner spacer 500 and the heat absorbing plate 301 are supported by the angle spacer 501. As illustrated in FIG. 5, a hole having a predetermined diameter is formed in the heat absorbing plate 301, the inner spacer 500 is inserted into the hole, and the hole has a larger diameter than the inner spacer 500 so that the heat transfer in the heat absorbing plate 301 is reduced. The angle spacer 501 is elongated in the longitudinal direction to support the inner spacer 500. The angle spacer 501 may serve to support the heat absorbing plate 301, and it is preferable to have a contact area as small as possible when the heat absorbing plate 301 is supported.

FIG. 6 illustrates a lower perspective view of the case 200. As illustrated in FIG. 6, the horizontal embossing 203 and the vertical embossing 202 are alternately formed with each other, and the lateral embossing 205 is formed on the side surface portion 204.

FIG. 7 is a plan view and a cross-sectional view of the evacuated heat absorbing panel. As illustrated in FIG. 7, the dome-shaped transmission window 101 illustrated in FIG. 7B as a cross-sectional view taken along line J-J is included and the horizontal groove 102 is formed between the transmission windows. FIG. 7C is a cross-sectional view taken along line G-G. As illustrated in FIG. 7C, the inner spacer 500 is mounted for each section.

FIG. 8 illustrates the cross-sectional view in FIG. 7 and as illustrated in FIG. 8, FIG. 8A is a cross-sectional view taken along line L-L. As illustrated in FIG. 8A, a set of heat medium circulation tubes 302 is bonded to the heat absorbing plate 301. At the center, the inner spacer 500 and the angle spacer 501 supporting the inner spacer 500 are illustrated. FIG. 8B is a cross-sectional view taken along line M-M. As illustrated in FIG. 8B, the groove 102 is shown in a plane.

FIG. 9 illustrates that the side spacer 400 is bonded to the connection portion 206 of the side surface portion 204 and the edge connection portion 104 of the glass window 100 is directly bonded to the side spacer 400. Accordingly, the glass window 100 is bonded directly to the side spacer 400 made of the metal material to secure durability against vacuum tightness.

In the present invention, a getter material may be applied on a portion except for the window glass through which solar light is transmitted. The getter material may be applied on the bottom surface portion or the side portion of the case and the side spacer. In addition, the getter material may be applied on one side or both sides of the heat absorbing plate and may be appropriately applied according to the degree of vacuum to be maintained. In addition, the inner spacer 500 may be made of a metal, ceramics, glass or an inorganic material. The side spacer 400 may have a structure such as a wrinkle shape capable of absorbing the stress generated by a temperature difference between the window glass 100 and the case 200.

While it has been described that various modifications of the present invention can be made with reference to exemplary embodiments of the present invention, it is to be understood that the present invention is not limited to the disclosed exemplary embodiments, but, on the contrary, it is to be understood that the techniques that can be modified and used by those skilled in the art in the claims and the detailed description of the present invention are included in the technical scope of the present invention.

### Industrial Availability

The present invention relates to a solar evacuated heat collecting panel for collecting solar heat energy, and is the invention having high industrial availability capable of effectively minimizing the loss of solar energy collected therein while effectively responding to the external stress by a structure of a glass window and a shape of a case.

## Claims

1. A solar evacuated heat collecting panel which collects solar heat to obtain energy, the evacuated heat collecting panel comprising:
a case made of glass or a metallic material;
a glass window mounted on the upper portion of the case so as to form a space together with the case;
a heat collecting portion including a glass window mounted on the upper portion of the case so as to form a space together with the case and one or more heat medium circulation tubes attached to the lower portion of the heat absorbing plate by brazing welding and mounted by penetrating one side of the case;
a side space made of a metallic material to connect an edge of the glass window and an edge of the case to each other;
an inner spacer that penetrates the heat absorbing plate to support the case and the glass window at a predetermined interval; and
an evacuating tube mounted on one side of the case to evacuate the interior of the panel.

2. The solar evacuated heat collecting panel of claim 1, wherein the case includes a bottom surface portion, a side surface portion formed integrally with the bottom surface portion, and a connection portion formed integrally with the upper end of the side surface portion, a plurality of horizontal embossing grooves and vertical embossing grooves are formed alternately to each other on the bottom surface portion, a plurality of vertical embossing grooves are formed on the side surface portion, and the connection portion is formed in a planar shape and the side spacer is bonded to the connection portion.

3. The solar evacuated heat collecting panel of claim 1, wherein the side spacer is formed of a ' 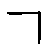 ' or "⊏'-shaped angle.

4. The solar evacuated heat collecting panel of claim 1, wherein the glass window includes horizontal grooves formed at predetermined intervals, vertical grooves formed at predetermined intervals while crossing the horizontal grooves, a plurality of dome-shaped transmission windows formed between the horizontal grooves and the vertical grooves, an outer groove formed when an outmost horizontal groove and an outmost vertical groove meet each other, and an edge connection portion formed around the outer groove, and the side spacer is bonded to the edge connection portion directly or through fritz bonding.

5. The solar evacuated heat collecting panel of claim 1, wherein the inner spacer includes a plurality of cylindrical or spherical spacers which are mounted on the lower surface of the vertical groove formed at the center of the glass window along the vertical groove to support the glass window and a pair of angle-shaped spacers which support the lower portion of the plurality of cylindrical or spherical spacers and facing each other to be elongated in a longitudinal direction.

6. The solar evacuated heat collecting panel of claim 1, wherein a getter is applied on the front surface of the case, the inner surface of the side spacer, one side or both sides of the heat absorbing plate, or a partial surface of the heat absorbing plate to absorb gas in the evacuated heat collecting panel.

7. The solar evacuated heat collecting panel of claim 1, wherein the inner spacer is made of metal, ceramic, glass or an inorganic material.

8. The solar evacuated heat collecting panel of claim 1, wherein the inner surface or the outer surface of the glass window is coated with an organic or inorganic material for increasing light transmittance and decreasing reflectance.
